# EUROPEAN PATENT SPECIFICATION

(11) **EP 2 568 232 B1**
(45) Date of publication and mention of the grant of the patent: **29.04.2020**
(21) Application number: 12160718.8
(22) Date of filing: 22.03.2012
(51) Int. Cl.: F25B 13/00, F25B 40/00, F25B 1/10

(54) **Air conditioner**
Klimaanlage
Climatiseur

(30) Priority: 06.09.2011 KR 20110089982
(43) Date of publication of application: 13.03.2013
(73) Proprietor: LG Electronics Inc., Seoul 07336 (KR)
(72) Inventor: KIM, Byeongsu, 153-802 Seoul (KR); RYU, Byoungjin, 153-802 Seoul (KR); KIM, Beomchan, 153-802 Seoul (KR); JANG, Yonghee, 153-802 Seoul (KR); KO, Younghwan, 153-802 Seoul (KR)
(74) Representative: Plasseraud IP

(56) References cited:
- EP-A2- 2 325 578
- DE-A1- 3 422 390

## Description

### BACKGROUND

The present disclosure relates to an air conditioner, and more particularly, to an air conditioner having improved system efficiency and performance and a compact size.

Generally, an air conditioner is an appliance that cools and heats an indoor space by heat-exchanging between air and a refrigerant while the refrigerant is compressed, condensed, expanded, and evaporated. The air conditioner includes a compressor, a condenser, an expansion valve, and an evaporator. The refrigerant discharged from the compressor is condensed in the condenser and expanded in the expansion valve. The expanded refrigerant is evaporated in the evaporator and then is sucked again into the compressor. The document EP 2 325 578 A2 discloses an air conditioner according the preamble of claim 1.

However, the air conditioner according to a related art may not sufficiently execute its cooling or heating performance when a cooling or heating load is varied according to variations of temperatures of indoor and outdoor spaces. For example, in case of an extreme cold area, since a temperature exchange with external air does not smoothly occur, the cooling performance may be significantly deteriorated. To solve this limitation, a compressor having large capacity should be provided or an additional compressor should be further provided.

To solve the above-described limitation, a vapor injection method according to claim 1 for reducing a load of the compressor and securing a sufficient refrigerant by introducing a portion of the refrigerant passing through the condenser again into the compressor when the cooling or heating load is increased has been proposed.

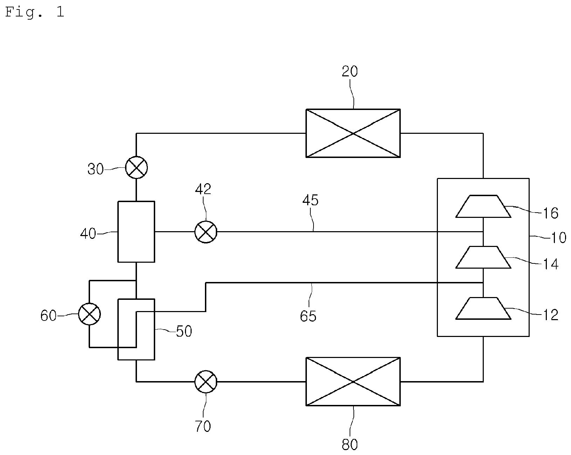

Referring to Fig. 1, the air conditioner according to the related art includes a compressor 10 including a first compression part 12, a second compression part 14, and a third compression part 16.

A refrigerant discharged from the compressor 10 passes through a first expansion unit 30 via a condenser 20. The refrigerant passing through the first expansion unit 30 inflows into a phase separator 40. The refrigerant inflowing into the phase separator 40 is in a state in which a liquid refrigerant and a gaseous refrigerant are mixed with each other, and also is separated into the liquid refrigerant and the gaseous refrigerant by passing through the phase separator 40. The phase separator 40 discharges the separated gaseous refrigerant into a separate tube. Also, the refrigerating in which the liquid refrigerant remaining after the gaseous refrigerant is separated and the gaseous refrigerant are mixed with each other are discharged through a separate outflow part.

The separated gaseous refrigerant may flow toward a discharge part of the second compression part 14 of the compressor 10 through a first injection tube 45. The refrigerant discharged from the second compression part 14 and the refrigerant introduced through the first injection tube 45 are mixed with each other to flow into the third compression part 16.

A first injection valve 42 is disposed in the first injection tube 45. The first injection valve 42 may control the amount of refrigerant flowing into the first injection tube 45 according to a heating load of the air conditioner.

The liquid and gaseous refrigerants discharged from the phase separator 40 flow into an internal heat-exchanger 50. The air conditioner may further include a second injection tube 65 branched from a tube connected to the internal heat-exchanger 50. The refrigerant flowing into the second injection tube 65 may be heat-exchanged with the refrigerant discharged from the phase separator 40 while flowing into the internal heat-exchanger 50.

The second injection tube 65 is connected to the compressor 10. In detail, the second injection tube 65 is connected to the discharge part of the first compression part 12. Also, the refrigerant flowing into the second injection tube 65 is mixed with the refrigerant discharged from the first compression 12, and then the mixed refrigerant flows into the second compression part 14.

The refrigerant discharged from the phase separator 40 is throttled while passing through a second expansion valve 70, and the refrigerant passing through the second expansion valve 70 flows into an evaporator 80. The refrigerant evaporated in the evaporator 80 is introduced again into the compressor 10 to form a heating cycle.

As described above and mentioned in Patent Literature 1, in the air conditioner according to the related art, to inject the refrigerant into the compressor 10 including the plurality of compression parts, the phase separator 40 and the internal heat-exchanger should be separately provided. Thus, the air conditioner may be complicated in structure and increased in manufacturing cost.

### PATENT LITERATURE

[Patent Literature 1] EP2325578 A2 (LG ELECTRONICS INC [KR]), 25/05/2011

Although not shown, the phase separator 40 may be omitted and the internal heat-exchanger may be provided. In this case, the refrigerant may be injected into the compressor using two internal heat-exchangers. Similarly, in case where the two internal heat-exchangers are provided, the air conditioner may be complicated in structure and increased in manufacturing cost.

### SUMMARY

Embodiments provide an air conditioner which is capable of improving cooling or heating performance and efficiently utilizing an inner space.

The invention provides an air conditioner including an internal heat-exchanger and a phase separator which are capable of being utilized during the cooling or heating.

The invention is defined by an air conditioner according to claim 1.

The details of one or more embodiments are set forth in the accompanying drawings and the description below. Other features will be apparent from the description and drawings, and from the claims.

### BRIEF DESCRIPTION OF THE DRAWINGS

Fig. 1 is a schematic view illustrating a refrigerant cycle of an air conditioner according to a related art.
Fig. 2 is a view of a phase separator according to an embodiment.
Fig. 3 is a view illustrating a connection relationship between a phase separator and a compressor according to an embodiment.
Fig. 4 is a view illustrating a refrigerant flow during the heating in a refrigerant cycle in which a phase separator is applied according to an embodiment.
Fig. 5 is a view illustrating a refrigerant flow during the cooling in a refrigerant cycle in which a phase separator is applied according to an embodiment.

### DETAILED DESCRIPTION OF THE EMBODIMENTS

Hereinafter, exemplary embodiments will be described with reference to the accompanying drawings.

In the detailed description of the present application, a term an "inlet side" or "outlet side" may a term defined based on a flow direction of a refrigerant.

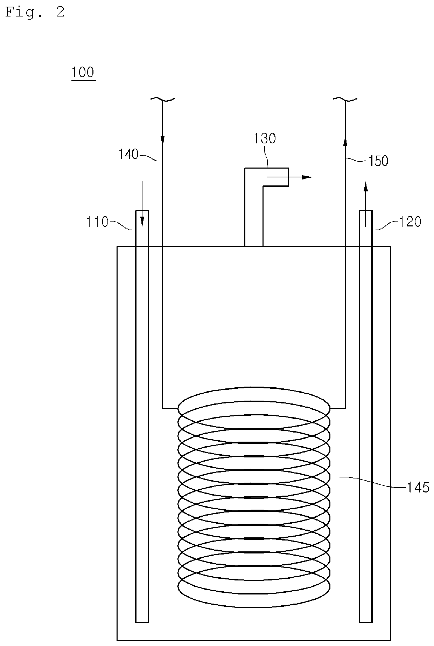

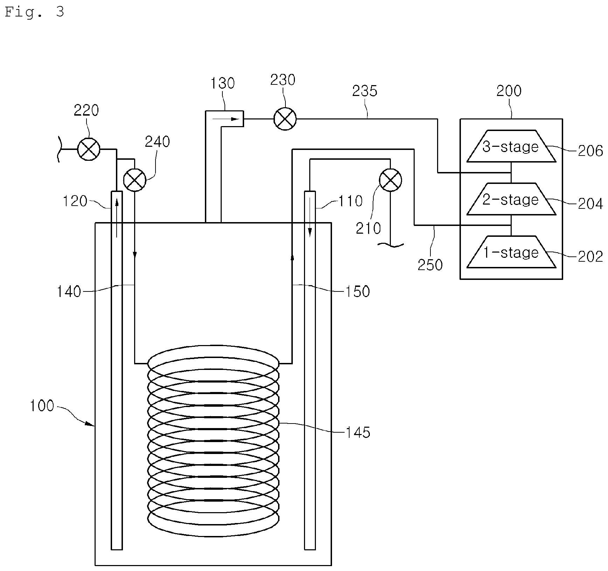

Fig. 2 is a view of a phase separator according to an embodiment. Fig. 3 is a view illustrating a connection relationship between a phase separator and a compressor according to an embodiment.

Referring to Figs. 2 and 3, an air conditioner according to an embodiment includes a compressor 200 and a phase separator 100 for discharging a refrigerant to be injected into the compressor 200.

In detail, the compressor 200 includes first, second, and third compression parts 202, 204, and 206 to compress the refrigerant in multiple stages. Thus, the refrigerant flowing into the compressor 200 is compressed while successively passing through the first, second, and third compression parts 202, 204, and 206. After the refrigerant is compressed by the third compression part 206, the refrigerant is discharged from the compressor 10.

The phase separator 100 includes an inflow part 110 through which a refrigerant expanded through a first expansion unit 210, a gas separation part 130 through which a gaseous refrigerant separated from the refrigerant flowing into the inflow part 110 is discharged, and an outflow part 120 through which the refrigerant flowing into the inflow part 110 and remaining after the gaseous refrigerant is separated is discharged.

The first expansion unit 210 decompresses the refrigerant condensed by a condenser. The refrigerant has a two-phase state, i.e., a state in which the liquid refrigerant and the gaseous refrigerant are mixed with each other when the refrigerant is decompressed by the first expansion unit 210.

The gaseous refrigerant of the refrigerant introduced through the inflow part 110 is discharged through the gas separation part 130. To easily discharge the gaseous refrigerant, the gas separation part 130 extends upward from a top surface of the phase separator 100.

A high pressure injection passage 235 for guiding the gaseous refrigerant discharged from the gas separation part 130 to the compressor 200 is disposed between the gas separation part 130 and the compressor 200.

The high pressure injection passage 235 is connected to a discharge side of the second compression part 204. The refrigerant flowing into the high pressure injection passage 235 is mixed with the refrigerant compressed by the second compression part 204 and flows into the third compression part 206. A portion of the compressor 200 connected to the high pressure injection passage 235 may be called a "high pressure part".

An injection valve 230 for adjusting the amount of refrigerant to be injected into the compressor 200 is disposed in the high pressure injection passage 235. An opening degree of the injection valve 230 may be controlled based on the amount of refrigerant required according to the cooling or heating load.

The refrigerant introduced through the inflow part 110 is cooled when the refrigerant is heat-exchanged in an internal heat-exchanger 145 and then discharged to the outside of the phase separator 100 through the outflow part 120.

A second expansion unit 220 for decompressing the refrigerant is disposed at the discharge side of the inflow part 120. The refrigerant discharged through the inflow part 120 flows into an evaporator after the refrigerant is expanded by the second expansion unit 220.

The phase separator 100 includes a first inflow tube 140 through which at least one portion of the refrigerant discharged through the outflow part 120 is branched and flows and a first outflow tube 150 for guiding the refrigerant introduced through the first inflow tube 140 to the outside of the phase separator 100.

The first inflow tube 140 bypasses the refrigerant discharged from the phase separator 100 to flow again into the phase separator 100. Thus, the first inflow tube 140 may be called a "bypass part". Also, the first inflow tube 140 may extend inward from the outside of the phase separator 100.

A third expansion unit 240 for expanding the refrigerant is disposed in the first inflow tube 140. The refrigerant bypassed into the first inflow tube 140 may be cooled while passing through the third expansion unit 240 and flow into the phase separator 100.

The internal heat-exchanger 145 communicating with the first inflow tube 140 and the first outflow tube 150 is disposed in an inner space of the phase separator 100. The refrigerant introduced through the first inflow tube 140 flows into the first outflow tube 150 via the internal heat-exchanger 145.

The internal heat-exchanger 145 may have a structure which includes a tube through which a refrigerant flows and has a wide surface area to improve heat-exchange efficiency. For example, the internal heat-exchanger 145 may have a plurality of bent shapes such as a coil.

The refrigerant (hereinafter, referred to as a first refrigerant) introduced through the inflow part 110 and the refrigerant (hereinafter, referred to as a second refrigerant) introduced through the first inflow tube 140 are heat-exchanged with each other in the internal heat-exchanger 145. In detail, the refrigerant introduced through the inflow part 110 is disposed at the outside of the tube of the internal heat-exchanger 145 in a state where the refrigerant is stored in the phase separator 100. Also, the refrigerant introduced through the first inflow tube 140 flows into the tube. Thus, the refrigerants may be heat-exchanged with each other.

When the first and second refrigerants are heat-exchanged with each other, the second refrigerant absorbs heat. As a result, at least one portion of the second refrigerant may be phase-changed in a gaseous state. The phase-changed gaseous refrigerant is discharged to the outside of the phase separator 100 through the first outflow tube 150. The first outflow tube 150 extends upward from the top surface of the phase separator 100.

A low pressure injection passage 250 for guiding the refrigerant discharged through the first outflow tube 150 to the compressor 200 is disposed between the phase separator 100 and the compressor 200. The low pressure injection passage 250 is connected to a discharge side of the first compression part 202. The refrigerant flowing into the compressor 200 through the low pressure injection passage 250 may be mixed with the refrigerant compressed by the first compression part 202 and flow into the second compression part 204.

A portion of the compressor 200 connected to the low pressure injection passage 250 may be called a "low pressure part". The refrigerant flowing into the low pressure injection passage 250 may have a pressure less than that of the refrigerant flowing into the high pressure injection passage 235.

The amount of refrigerant injected through the low pressure injection passage 250 may be adjusted by controlling an opening degree of the third expansion unit 240. The opening degree of the third expansion unit 240 may be adjusted based on the amount of refrigerant introduced through the inflow part 110 or a state of the refrigerant.

That is, since the heat-exchanged amount or heat-exchange efficiency in the internal heat-exchanger 145 may be determined according to the amount (or the stored refrigerant amount) of refrigerant stored in the phase separator 100 or a state of the refrigerant, the amount of refrigerant to be injected into the compressor 200 may be adjusted according to the stored refrigerant amount.

A refrigerant flow will be described below.

The refrigerant decompressed by the first expansion unit 210 is stored in the phase separator 100 through the inflow part 110 and heat-exchanged with the refrigerant flowing into the internal heat-exchanger 145. Then, the refrigerant is discharged through the outflow part 120. The refrigerant discharged through the outflow part 120 is decompressed by the second expansion unit 220 and flows into the evaporator.

At least one portion of the refrigerant discharged through the outflow part 120 is expanded by the second expansion unit 240 and then flows into the phase separator 100 through the first inflow tube 140. Also, the refrigerant of the first inflow tube 140 flows into the internal heat-exchanger 145 and heat-exchanged with the refrigerant stored in the phase separator 100. Then, the refrigerant is discharged to the outside of the phase separator 100 through the first outflow tube 150.

The refrigerant discharged through the first outflow tube 150 flows into the low pressure part of the compressor 200 through the low pressure injection passage 250.

The gaseous refrigerant of the two-phase refrigerant stored in the phase separator 100 is discharged through the gas separation part 130 and injected into the high pressure part of the compressor 200.

As described above, the refrigerant is injected into the compressor 200 through the plurality of injection passages 235 and 250 to secure a sufficient refrigerant even though the heating load is large. Also, a refrigerant having a middle pressure may flow to reduce an operation load of the compressor 200. Here, the middle pressure may be greater than a suction pressure of the compressor 200 and less than a discharge pressure of the compressor 200.

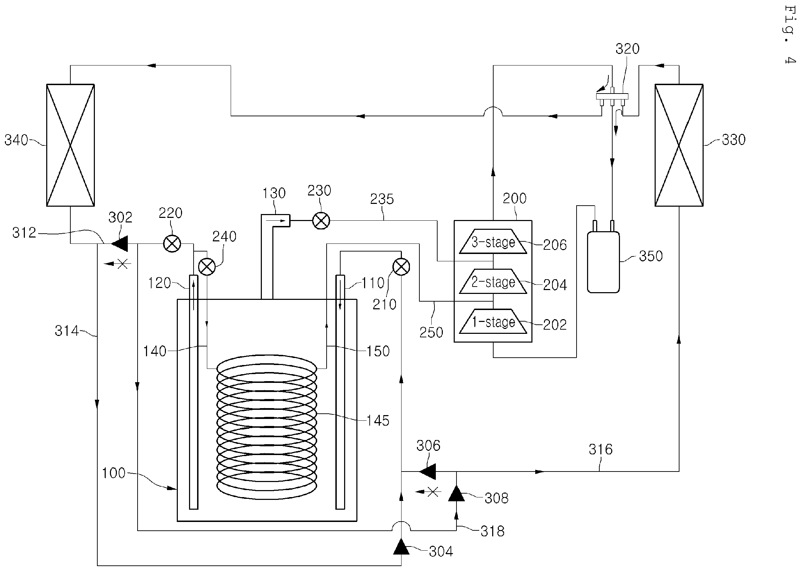

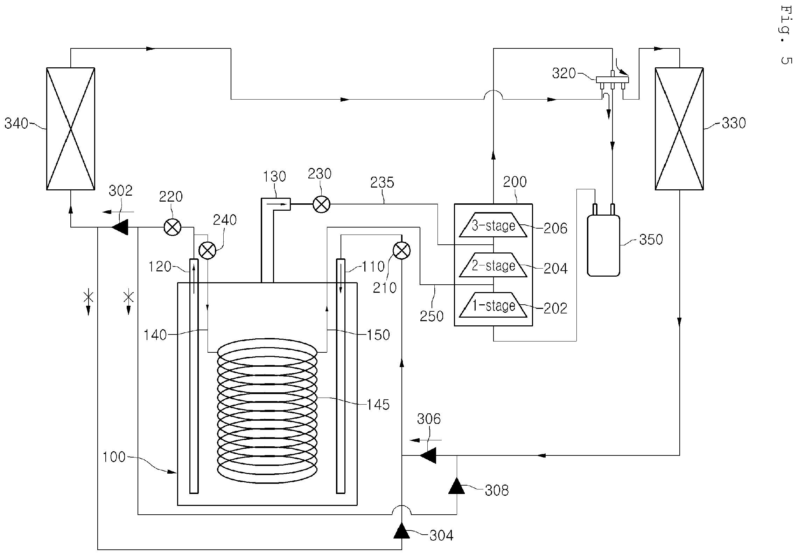

Fig. 4 is a view illustrating a refrigerant flow during the heating in a refrigerant cycle in which a phase separator is applied according to an embodiment. Fig. 5 is a view illustrating a refrigerant flow during the cooling in a refrigerant cycle in which a phase separator is applied according to an embodiment.

A refrigerant cycle of the air conditioner will be described with reference to Fig. 4. The air conditioner may include a four-way valve 320 for adjusting a flow direction of the refrigerant discharged from the compressor 200 according to a cooling or heating operation, an outdoor heat-exchanger 330 in which indoor air is heat-exchanged with outdoor air in an indoor room, and an accumulator 350 for temporarily storing the refrigerant flowing into the compression 200.

A refrigerant passing through the condenser flows into the phase separator 100 via the first expansion unit 210. In detail, when the air conditioner is operated in the cooling mode, the refrigerant passing through the outdoor heat-exchanger 330 flows into the phase separator 100. Also, when the air conditioner is operated in the heating mode, the refrigerant passing through the indoor heat-exchanger 340 may flow into the phase separator 100.

The air conditioner may further include a plurality of check valves and a plurality of connection passages which adjust the refrigerant flow so that the phase separation and the refrigerant injection into the compressor are realized during the cooling operation or the heating operation.

In detail, the air conditioner includes a first connection passage 312 connecting the outflow part 120 to the indoor heat-exchanger 340 and a first check valve 302 provided in the first connection passage 312. The first check valve 302 is disposed in a passage defined between the second expansion unit 220 and the indoor heat-exchanger 340 to guide the refrigerant flow in one direction.

The air conditioner further includes a second connection passage 314 branched from one point of the passage defined between the first check valve 302 and the indoor heat exchanger 340 and communicating with the inflow part 110. A second check valve 304 through which the refrigerant flows only toward the inflow part 110 is disposed in the second connection passage 314.

The air conditioner further includes a third connection passage 316 through which the refrigerant flows from the outdoor heat-exchanger 330 into the inflow part 110. A third check valve 306 through which the refrigerant flows from the outdoor heat-exchanger 330 into the inflow part 110 is disposed in the third connection passage 316.

The air conditioner further includes a fourth connection passage 318 branched from one point of the passage defined between the first check valve 302 and the second expansion unit 220 and communicating with the third connection passage 316. A fourth check valve 308 through which the refrigerant flows from the first connection passage 312 into the third connection passage 316 is disposed in the fourth connection passage 318.

A refrigerant flow in a refrigerant cycle when the air conditioner is operated in the heating mode will be described with reference to Fig. 4.

The refrigerant compressed by the compressor 200 flows into the indoor heat-exchanger 340 via the four-way valve 320. The refrigerant condensed in the indoor heat-exchanger flows into the second connection passage 314. Here, the first check valve 302 prevents the refrigerant from flowing into the first connection passage 312.

The refrigerant flowing into the second connection passage 314 is expanded by the first expansion unit 210 via the second check valve 304. The refrigerant passing through the first expansion unit 210 flows into the phase separator 100 through the inflow part 110.

The gaseous refrigerant separated by the phase separator 100 is injected into the high pressure part of the compressor 200 through the high pressure injection passage 235. The amount of refrigerant to be injected into the high pressure part may be adjusted by the injection valve 230, and an opening degree of the injection valve 230 of the injection valve 230 may be adjusted according to a heating load. For example, when the heating load is large, the opening degree of the injection valve 230 may be increased.

The gaseous and liquid refrigerants remaining in the phase separator 100 without being separated is discharged through the outflow part 120. At least one portion of the refrigerant discharged through the outflow part 120 is bypassed into the first inflow tube 140 to flow into the phase separator 100. Then, the refrigerant is heat-exchanged with the refrigerant stored in the phase separator 100 in the internal heat-exchanger 145.

The refrigerant heated in the internal heat-exchanger 145 is injected into the low pressure part of the compressor 200 through the low pressure injection passage 250. The amount of refrigerant injected into the low pressure part may be adjusted by the third expansion unit 240. An opening degree of the third expansion unit 240 may be adjusted according to a heating load. For example, when the heating load is large, the opening degree of the third expansion unit 240 may be increased.

The refrigerant discharged through the outflow part 120 is expanded by the second expansion unit 220 to flow into the fourth connection passage 318.

The refrigerant flows from the first connection passage 312 into the indoor heat-exchanger 340 by the first check valve 302. However, since the refrigerant discharged from the indoor heat-exchanger 340 has a pressure greater than that of the refrigerant of an inlet side of the first check valve 302, the refrigerant passing through the second expansion unit 220 may flow into the fourth connection passage 318.

The refrigerant passing through the fourth check valve 308 flows into the outdoor heat-exchanger 330 through the third connection passage 316.

The refrigerant may flow from the third connection passage 316 into the inflow part 110 by the third check valve 306. However, since the refrigerant of an inflow part side has a pressure greater than that of the inlet side of the outdoor heat-exchanger 330, the refrigerant may flow into the outdoor heat-exchanger 330 via the fourth check valve 308 and the third connection passage 316.

The refrigerant is evaporated in the outdoor heat-exchanger 330, and the refrigerant passing through the outdoor heat-exchanger 330 flows into the accumulator 350 via the four-way valve 320. The gaseous refrigerant of the refrigerant stored in the accumulator 350 flows into the compressor 200. This refrigerant cycle may be repeatedly performed.

A refrigerant flow in a refrigerant cycle when the air conditioner is operated in the cooling mode will be described with reference to Fig. 5.

The refrigerant compressed by the compressor 200 flows into the outdoor heat-exchanger 330 via the four-way valve 320. The condensed refrigerant passing through the outdoor heat-exchanger 330 flows into the third connection passage 316. The refrigerant flowing into the third connection passage 316 flows into the inflow part 110 via the third check valve 306 and the first expansion unit 210.

The refrigerant flowing into the third connection passage 316 does not flow into the second connection passage 314 and the fourth connection passage 318 by the fourth check valve 308, respectively.

The refrigerant flowing into the inflow part 110 passes through the phase separator 100. Since a flow of the refrigerant injected from the phase separator 100 into the compressor 200 is equal to that of Fig. 4, its description will be omitted.

The refrigerant discharged from the outflow part 150 flows into the first connection passage 312 via the second expansion unit 220 and flows into the indoor heat-exchanger 340 via the first check valve 302.

Since the refrigerant flowing into the third connection part 316 has a pressure greater than that of the refrigerant flowing into the first connection passage 312, the inflow of the refrigerant into the second connection passage 314 and the fourth connection passage 318 may be limited. The refrigerant passing through the first connection passage 312 flows into the indoor heat-exchanger 340.

The refrigerant evaporated in the indoor heat-exchanger 340 flows into the accumulator 350 via the four-way valve 320. The gaseous refrigerant of the refrigerant stored in the accumulator 350 flows into the compressor 200. This refrigerant cycle may be repeatedly performed.

According to the proposed embodiment, since the refrigerant is injected into the compressor including the multiple stage compression parts, the circulation amount of refrigerant may be increased to improve the cooling or heating performance.

Also, the internal heat-exchanger may be disposed within the phase separator to improve the gas and liquid separation performance. Also, since the phase separator and the internal heat-exchanger may not be separately provided, the assembly of the air conditioner may be improved and also the compact air conditioner may be realized.

## Claims

1. An air conditioner comprising a compressor (200) for compressing a refrigerant;
a condenser (340) for condensing the refrigerant compressed by the compressor;
a phase separator (100) for separating a gaseous refrigerant from the refrigerant passing through the condenser;
an evaporator (330) for evaporating the refrigerant passing through the phase separator;
an inflow part (110) provided in the phase separator to introduce the refrigerant into the phase separator;
a gas separation part (130) configured to discharge the gaseous refrigerant separated by the phase separator;
an injection passage (235,250) configured to inject the refrigerant discharged from the phase separator into the compressor; and
an internal heat-exchanger (145) provided within the phase separator to heat-exchange a refrigerant therein with the refrigerant introduced through the inflow part;
an outflow part (120) provided in the phase separator to discharge the refrigerant introduced through the inflow part after the refrigerant introduced through the inflow part is heat-exchanged with the refrigerant within the internal heat-exchanger;
a first inflow tube (140) bypassing the refrigerant discharged from the outflow part to introduce the discharged refrigerant into the phase separator;
a first outflow tube (150) discharging the refrigerant introduced through the first inflow tube to the outside of the phase separator; wherein
the injection passage (235, 250) comprises a low pressure injection passage (250) for guiding injection of the refrigerant discharged through the first outflow tube into the compressor; and
a high pressure injection passage (235) for guiding injection of the refrigerant discharged through the gas separation part so that the refrigerant is injected into a high pressure part of the compressor, wherein:
the compressor comprises a first compression part (202) for compressing the refrigerant passing through the evaporator,
a second compression part (204) for compressing the refrigerant compressed by the first compression part, and
a third compression part (206) for compressing the refrigerant compressed by the second compression part, **characterized in that**:
the refrigerant discharged from the gas separation part flows into between the second compression part and the third compression part and the refrigerant discharged through the first outflow tube flows into between the first compression part and the second compression part,
the condenser or the evaporator is an indoor heat-exchanger, and the air conditioner further comprises:
a first connection passage (312) connecting the outflow part to the indoor heat-exchanger;
a first check valve (302) provided in the first connection passage to guide the refrigerant in one direction;
a second connection passage (314) branched from one point of a passage defined between the first check valve and the indoor heat-exchanger to communicate with the inflow part; and
a second check valve (304) provided in the second connection passage to guide a refrigerant flow in a direction of the inflow part.

2. The air conditioner according to claim 1, wherein the first inflow tube (140) and the first outflow tube (150) communicate with the internal heat-exchanger (145).

3. The air conditioner according to claim 1, wherein the refrigerant introduced through the first inflow tube (140) flows into the internal heat-exchanger (145) and is heat-exchanged with the refrigerant introduced through the inflow part (110).

4. The air conditioner according to claim 1, further comprising:
a first expansion unit (210) provided at an inlet side of the inflow part to expand a refrigerant to be introduced into the phase separator (100); and
a second expansion unit (220) provided at an outlet side of the outflow part to expand a refrigerant.

5. The air conditioner according to claim 1, further comprising:
a third expansion unit (240) provided in the first inflow tube (140) to expand a refrigerant to be introduced into the phase separator (100) through the first inflow tube (140).

6. The air conditioner according to claim 1, wherein the other one of the condenser or the evaporator (330) is an outdoor heat-exchanger, and
the air conditioner further comprises:
a third connection passage (316) configured to introduce a refrigerant from the outdoor heat-exchanger into the inflow part; and
a third check valve (306) provided in the third connection passage to guide the refrigerant flow from the outdoor heat-exchanger toward the inflow part.

7. The air conditioner according to claim 6, further comprising:
a fourth connection passage (318) branched from one point of the first connection passage to communicate with the third connection passage; and
a fourth check valve (308) provided in the fourth connection passage (318) to introduce a refrigerant from the first connection passage (312) toward the third connection passage(316).

## Patentansprüche

1. Klimaanlage, die aufweist:
einen Verdichter (200) zum Verdichten eines Kältemittels;
einen Kondensator (340) zum Kondensieren des von dem Verdichter verdichteten Kältemittels;
einen Phasenabscheider (100) zum Abscheiden eines gasförmigen Kältemittels von dem Kältemittel, das den Kondensator durchläuft;
einen Verdampfer (330) zum Verdampfen des Kältemittels, das den Phasenabscheider durchläuft;
einen Zuströmungsteil (110), der in dem Phasenabscheider bereitgestellt ist, um das Kältemittel in den Phasenabscheider einzuleiten;
einen Gasabscheidungsteil (130), der aufgebaut ist, um das von dem Phasenabscheider abgeschiedene gasförmige Kältemittel abzugeben;
einen Einspritzdurchgang (235, 250), der aufgebaut ist, um das von dem Phasenabscheider abgegebene Kältemittel in den Verdichter einzuspritzen; und
einen Innenwärmetauscher (145), der in dem Phasenabscheider bereitgestellt ist, um ein Kältemittel darin mit dem Kältemittel, das durch den Zuströmungsteil eingeleitet wird, wärmezutauschen;
einen Ausströmungsteil (120), der in dem Phasenabscheider bereitgestellt ist, um das durch den Zuströmungsteil eingeleitete Kältemittel abzugeben, nachdem das durch den Zuströmungsteil eingeleitete Kältemittel mit dem Kältemittel in dem Innenwärmetauscher wärmegetauscht wurde;
ein erstes Zuströmungsrohr (140), welches das von dem Ausströmungsteil abgegebene Kältemittel umleitet, um das abgegebene Kältemittel in den Phasenabscheider einzuleiten;
ein erstes Ausströmungsrohr (150), welches das durch das erste Zuströmungsrohr eingeleitete Kältemittel nach außerhalb des Phasenabscheiders abgibt, wobei
der Einspritzdurchgang (235, 250) aufweist: einen Niederdruckeinspritzdurchgang (250), um das Einspritzen des durch das erste Ausströmungsrohr abgegebenen Kältemittels in den Verdichter zu führen; und
einen Hochdruckeinspritzdurchgang (235), um das Einspritzen des durch den Gasabscheidungsteil abgegebenen Kältemittels zu führen, so dass das Kältemittel in einen Hochdruckteil des Verdichters eingespritzt wird,
wobei:
der Verdichter aufweist: einen ersten Verdichtungsteil (202) zum Verdichten des Kältemittels, das den Verdampfer durchläuft,
einen zweiten Verdichtungsteil (204) zum Verdichten des von dem ersten Verdichtungsteil verdichteten Kältemittels, und
einen dritten Verdichtungsteil (206) zum Verdichten des von dem zweiten Verdichtungsteil verdichteten Kältemittels,
**dadurch gekennzeichnet, dass**:
das von dem Gasabscheidungsteil abgegebene Kältemittel zwischen dem zweiten Verdichtungsteil und dem dritten Verdichtungsteil einströmt und das von dem ersten Ausströmungsrohr abgegebene Kältemittel zwischen dem ersten Verdichtungsteil und dem zweiten Verdichtungsteil einströmt,
der Kondensator oder der Verdampfer ein Innenwärmetauscher ist, und die Klimaanlage ferner aufweist:
einen ersten Verbindungsdurchgang (312), der den Ausströmungsteil mit dem Innenwärmetauscher verbindet;
ein erstes Rückschlagventil (302), das in dem ersten Verbindungsdurchgang bereitgestellt ist, um das Kältemittel in eine Richtung zu leiten;
einen zweiten Verbindungsdurchgang (314), der von einem Punkt eines Durchgangs, der zwischen dem ersten Rückschlagventil und dem Innenwärmetauscher definiert ist, abzweigt, um mit dem Zuströmungsteil in Verbindung zu stehen; und
ein zweites Rückschlagventil (304), das in dem zweiten Verbindungsdurchgang bereitgestellt ist, um eine Kältemittelströmung in einer Richtung des Zuströmungsteils zu führen.

2. Klimaanlage nach Anspruch 1, wobei das erste Zuströmungsrohr (140) und das erste Ausströmungsrohr (150) mit dem Innenwärmetauscher (145) in Verbindung stehen.

3. Klimaanlage nach Anspruch 1, wobei das durch das erste Zuströmungsrohr (140) eingeleitete Kältemittel in den Innenwärmetauscher (145) strömt und mit dem durch den Zuströmungsteil (110) eingeleiteten Kältemittel Wärme austauscht.

4. Klimaanlage nach Anspruch 1, die ferner aufweist:
eine erste Expansionseinheit (210), die an einer Einlassseite des Zuströmungsteils bereitgestellt ist, um ein Kältemittel, das in den Phasenabscheider (100) eingeleitet werden soll, zu expandieren; und
eine zweite Expansionseinheit (220), die an einer Auslassseite des Ausströmungsteils bereitgestellt ist, um ein Kältemittel zu expandieren.

5. Klimaanlage nach Anspruch 1, die ferner aufweist:
eine dritte Expansionseinheit (240), die in dem ersten Zuströmungsrohr (140) bereitgestellt ist, um ein Kältemittel, das durch das erste Zuströmungsrohr (140) in den Phasenabscheider (100) eingeleitet werden soll, zu expandieren.

6. Klimaanlage nach Anspruch 1, wobei der Andere des Kondensators oder des Verdampfers (330) ein Außenwärmetauscher ist, und
die Klimaanlage ferner aufweist:
einen dritten Verbindungsdurchgang (316), der aufgebaut ist, um ein Kältemittel von dem Außenwärmetauscher in den Zuströmungsteil einzuleiten; und
ein drittes Rückschlagventil (306), das in dem dritten Verbindungsdurchgang bereitgestellt ist, um die Kältemittelströmung von dem Außenwärmetauscher in Richtung des Zuströmungsteils zu führen.

7. Klimaanlage nach Anspruch 6, die ferner aufweist:
einen vierten Verbindungsdurchgang (318), der von einem Punkt des ersten Verbindungsdurchgangs verzweigt, um mit dem dritten Verbindungsdurchgang in Verbindung zu stehen; und
ein viertes Rückschlagventil (308), das in dem vierten Verbindungsdurchgang (318) bereitgestellt ist, um ein Kältemittel von dem ersten Verbindungsdurchgang in Richtung des dritten Verbindungsdurchgangs (316) einzuleiten.

## Revendications

1. Climatiseur comprenant un compresseur (200) pour compresser un réfrigérant ;
un condensateur (340) pour condenser le réfrigérant compressé par le compresseur ;
un séparateur de phase (100) pour séparer un réfrigérant gazeux du réfrigérant passant à travers le condensateur ;
un évaporateur (330) pour évaporer le réfrigérant passant à travers le séparateur de phase ;
une partie de flux entrant (110) prévue dans le séparateur de phase pour introduire le réfrigérant dans le séparateur de phase ;
une partie de séparation de gaz (130) configurée pour décharger le réfrigérant gazeux séparé par le séparateur de phase ;
un passage d'injection (235, 250) configuré pour injecter le réfrigérant déchargé du séparateur de phase dans le compresseur ; et
un échangeur de chaleur interne (145) prévu à l'intérieur du séparateur de phase pour réaliser un échange de chaleur d'un réfrigérant à l'intérieur de celui-ci avec le réfrigérant introduit à travers la partie de flux entrant ;
une partie de flux sortant (120) prévue dans le séparateur de phase pour décharger le réfrigérant introduit à travers la partie de flux entrant après avoir réalisé l'échange de chaleur du réfrigérant introduit à travers la partie de flux entrant avec le réfrigérant à l'intérieur de l'échangeur de chaleur interne ;
un premier tube de flux entrant (140) contournant le réfrigérant déchargé depuis la partie de flux sortant pour introduire le réfrigérant déchargé dans le séparateur de phase ;
un premier tube de flux sortant (150) déchargeant le réfrigérant introduit à travers le premier tube de flux entrant à l'extérieur du séparateur de phase ; dans lequel
le passage d'injection (235, 250) comprend un passage d'injection à basse pression (250) pour guider une injection du réfrigérant déchargé à travers le premier tube de flux sortant dans le compresseur ; et
un passage d'injection à haute pression (235) pour guider une injection du réfrigérant déchargé à travers la partie de séparation de gaz de sorte que le réfrigérant soit injecté dans une partie à haute pression du compresseur,
dans lequel
le compresseur comprend une première partie de compression (202) pour compresser le réfrigérant passant à travers l'évaporateur,
une deuxième partie de compression (204) pour compresser le réfrigérant compressé par la première partie de compression, et
une troisième partie de compression (206) pour compresser le réfrigérant compressé par la deuxième partie de compression,
**caractérisé en ce que**
le réfrigérant déchargé depuis la partie de séparation de gaz s'écoule entre la deuxième partie de compression et la troisième partie de compression et le réfrigérant déchargé à travers le premier tube de flux sortant s'écoule entre la première partie de compression et la deuxième partie de compression,
le condensateur ou l'évaporateur est un échangeur de chaleur intérieur, et le climatiseur comprend en outre :
un premier passage de raccordement (312) raccordant la partie de flux sortant à l'échangeur de chaleur intérieur ;
un premier clapet antiretour (302) prévu dans le premier passage de raccordement pour guider le réfrigérant dans un sens ;
un deuxième passage de raccordement (314) ramifié depuis un point d'un passage défini entre le premier clapet antiretour et l'échangeur de chaleur intérieur pour communiquer avec la partie de flux entrant ; et
un deuxième clapet antiretour (304) prévu dans le deuxième passage de raccordement pour guider un flux de réfrigérant dans un sens de la partie de flux entrant.

2. Climatiseur selon la revendication 1, dans lequel le premier tube de flux entrant (140) et le premier tube de flux sortant (150) communiquent avec l'échangeur de chaleur interne (145).

3. Climatiseur selon la revendication 1, dans lequel le réfrigérant introduit à travers le premier tube de flux entrant (140) s'écoule dans l'échangeur de chaleur interne (145) et subit un échange de chaleur avec le réfrigérant introduit à travers la partie de flux entrant (110).

4. Climatiseur selon la revendication 1, comprenant en outre :
une première unité d'expansion (210) prévue à un côté d'entrée de la partie de flux entrant pour réaliser l'expansion d'un réfrigérant à introduire dans le séparateur de phase (100) ; et
une deuxième unité d'expansion (220) prévue à un côté de sortie de la partie de flux sortant pour réaliser l'expansion d'un réfrigérant.

5. Climatiseur selon la revendication 1, comprenant en outre :
une troisième unité d'expansion (240) prévue dans le premier tube de flux entrant (140) pour réaliser l'expansion d'un réfrigérant à introduire dans le séparateur de phase (100) à travers le premier tube de flux entrant (140).

6. Climatiseur selon la revendication 1, dans lequel l'autre du condensateur ou de l'évaporateur (330) est un échangeur de chaleur extérieur, et
le climatiseur comprend en outre :
un troisième passage de raccordement (316) configuré pour introduire un réfrigérant depuis l'échangeur de chaleur extérieur dans la partie de flux entrant ; et
un troisième clapet antiretour (306) prévu dans le troisième passage de raccordement pour guider le flux de réfrigérant depuis l'échangeur de chaleur extérieur vers la partie de flux entrant.

7. Climatiseur selon la revendication 6, comprenant en outre :
un quatrième passage de raccordement (318) ramifié depuis un point du premier passage de raccordement pour communiquer avec le troisième passage de raccordement ; et
un quatrième clapet antiretour (308) prévu dans le quatrième passage de raccordement (318) pour introduire un réfrigérant depuis le premier passage de raccordement (312) vers le troisième passage de raccordement (316).
